# EUROPEAN PATENT SPECIFICATION

(11) **EP 2 112 340 B1**
(45) Date of publication and mention of the grant of the patent: **30.09.2015**
(21) Application number: 09005746.4
(22) Date of filing: 23.04.2009
(51) Int. Cl.: F01N 3/08, F01N 13/00

(54) **Exhaust gas purification device for internal combustion engine**
Abgasreinigungsvorrichtung für eine Brennkraftmaschine
Dispositif de purification de gaz d'échappement pour moteur à combustion interne

(30) Priority: 25.04.2008 JP 2008115922
(43) Date of publication of application: 28.10.2009
(73) Proprietor: TOYOTA JIDOSHA KABUSHIKI KAISHA, Toyota-shi, Aichi-ken, 471-8571 (JP)
(72) Inventor: Matsubara, Hiroyuki, Toyota-shi, Aichi-ken, 471-8571 (JP); Ibe, Masaya, Toyota-shi, Aichi-ken, 471-8571 (JP); Sobue, Yuuichi, Toyota-shi, Aichi-ken, 471-8571 (JP); Kakinohana, Masaru, Toyota-shi, Aichi-ken, 471-8571 (JP); Osaki, Mayuko, Toyota-shi, Aichi-ken, 471-8571 (JP)
(74) Representative: Kuhnen & Wacker

(56) References cited:
- DE-A1- 10 241 063
- FR-A- 2 885 953

## Description

### BACKGROUND OF THE INVENTION

### 1. Field of the Invention

The invention relates to an exhaust gas purification device for an internal combustion engine.

### 2. Description of the Related Art

In order to purify pollutants in exhaust gas of an internal combustion engine, catalysts are commonly installed in an exhaust passage. The activity of an exhaust gas purification catalyst is suppressed until the temperature of the catalysts becomes equal to or higher than a certain temperature. That is, when the temperature of the catalyst is low, pollutants cannot be sufficiently purified by the catalyst. Thus, the suppression of pollutants when the temperature of the catalyst is low, for example, immediately after the startup of an engine, remains as an important task.

Japanese Patent Application Publication No. 2007-113497 (JP-A-2007-113497) describes an exhaust gas purification device equipped with ozone supply means that supplies ozone downstream of a catalyst disposed in an exhaust passage. According to this device, hydrogen sulfides generated at the time of sulfur poisoning regeneration of the catalyst may be oxidized and removed using ozone.

An active oxygen such as ozone or the like is highly oxidative. It is conceivable to suppress the discharge of pollutants when the temperature of the catalyst is low, with the aid of this active oxygen (see Japanese Patent Application Publication No. 2007-289844 (JP-A-2007-289844) and Japanese Patent Application Publication No. 2007-152336 (JP-A-2007-152336)). However, electric power is necessary to generate active oxygen. Thus, to avoid increasing fuel consumption, it is important to efficiently use active oxygen while avoiding the waste thereof.

In Japanese Patent Application Publication No. 2007-113497 (JP-A-2007-113497), attention is focused on the use of ozone to oxidize and remove hydrogen sulfides generated when regenerating the catalyst from sulfur poisoning. On the other hand, the suppression of the discharge of pollutants when the temperature of the catalyst is low is not adequately addressed.
FR 2 885 953 A discloses an exhaust gas purification device comprising an oxidation catalyst, a NOx catalyst and an active oxygen supply device. The oxidation catalyst is disposed in an exhaust passage of an internal combustion engine. The NOx catalyst is installed downstream of the oxidation catalyst. The active oxygen supply device has a first supply port for supplying active oxygen to a region upstream of the oxidation catalyst and a second supply port for supplying active oxygen to a region between the oxidation catalyst and the NOx catalyst. The amount of ozone to be injected is controlled by a controller.

### SUMMARY OF THE INVENTION

The invention provides an exhaust gas purification device for an internal combustion engine purifies pollutants in exhaust gas through the use of active oxygen and achieves excellent purification performance while reducing the amount of active oxygen used.

A first aspect of the invention relates to an exhaust gas purification device equipped with an oxidation catalyst that is disposed in an exhaust passage of an internal combustion engine to oxidize unburned components in exhaust gas, an NOx catalyst that is installed downstream of the oxidation catalyst in a direction of flow of exhaust gas in the internal combustion engine to purify NOx in the exhaust gas, and an active oxygen supply device having a first supply port for supplying active oxygen to a region upstream of the oxidation catalyst in the direction of flow of the exhaust gas and a second supply port for supplying active oxygen to a region between the oxidation catalyst and the NOx catalyst.

According to the aforementioned construction, active oxygen can be supplied to the oxidation catalyst and the NOx catalyst. Thus, even when the temperature of the catalyst is low, the purification of pollutants can be promoted, and pollutants can be reliably restrained from being discharged into the atmosphere. Furthermore, according to the first invention, the supply of active oxygen to the oxidation catalyst and the supply of active oxygen to the NOx catalyst can be controlled individually. Thus, the supply of active oxygen to each of the oxidation catalyst and the NOx catalyst can be appropriately controlled in accordance with a state thereof. For example, when the oxidation catalyst suffers HC poisoning, a recovery from the HC poisoning can be made by supplying active oxygen from the first supply port. As a result, the intrinsic activity of the oxidation catalyst can be exerted, and hence the permeation by HC can be suppressed. Therefore, the promotion of the purification of NOx with the aid of active oxygen supplied from the second supply port can be prevented from being hindered by HC, and the amount of active oxygen that needs to be supplied from the second supply port can be reduced. For this reason, according to the first invention, the amount of use of active oxygen can be saved while realizing excellent purification performance. Thus, the electric power required for the generation of active oxygen can be reduced, and a contribution to an improvement in fuel consumption is made.

Further, the exhaust gas purification device according to this aspect of the invention may further be equipped with temperature information acquisition means for acquiring information on temperatures of the oxidation catalyst and the NOx catalyst, and control means for controlling supply of active oxygen from the first supply port and supply of active oxygen from the second supply port on a basis of the information.

According to the aforementioned construction, the supply of active oxygen from the first supply port and the supply of active oxygen from the second supply port can be controlled on the basis of the information on the temperatures of the oxidation catalyst and the NOx catalyst. Thus, the supply of active oxygen from the first supply port and the supply of active oxygen from the second supply port can be more appropriately controlled. Thus, the performance of purification can further be improved, and active oxygen can be more efficiently used (the amount of use of active oxygen can be saved).

Further, the exhaust gas purification device according to this aspect of the invention may further be equipped with HC poisoning determination means for determining whether or not the oxidation catalyst suffers HC poisoning, and HC poisoning recovery means for supplying active oxygen from the first supply port when it is determined that the oxidation catalyst suffers HC poisoning.

According to the aforementioned construction, a recovery from HC poisoning can be made by supplying active oxygen from the first supply port when it is determined that the oxidation catalyst suffers HC poisoning. Thus, the intrinsic activity of the oxidation catalyst can be exerted, and hence the permeation by HC can be suppressed. Therefore, the promotion of the purification of NOx with the aid of active oxygen supplied from the second supply port can be prevented from being hindered by HC, and the amount of active oxygen that needs to be supplied from the second supply port can be reduced.

Further, the exhaust gas purification device according to the first aspect of the invention is equipped with HC purification active oxygen amount calculation means for calculating an amount of active oxygen for oxidizing HC based on a calculated HC discharge amount, NOx purification active oxygen amount calculation means for calculating an amount of active oxygen for purifying NOx, HC purification means for supplying active oxygen from the first supply port in the amount calculated by the HC purification active oxygen amount calculation means, and NOx purification means for supplying active oxygen from the second supply port in the amount calculated by the NOx purification active oxygen amount calculation means.

According to the aforementioned construction, active oxygen for purifying HC can be supplied from the first supply port to the oxidation catalyst, and active oxygen for purifying NOx can be supplied from the second supply port to the NOx catalyst. Thus, the permeation of the oxidation catalyst by HC can be more reliably suppressed. As a result, the promotion of the purification of NOx with the aid of active oxygen supplied from the second supply port can be prevented from being hindered by HC, and NOx can be more reliably purified.

Further, the exhaust gas purification device according to this aspect of the invention may further be equipped with catalyst temperature determination means for determining whether the temperature of the NOx catalyst is in a predetermined low temperature range or in a predetermined intermediate temperature range as a temperature range higher than the predetermined low temperature range, and active oxygen amount control means for controlling an amount of active oxygen supplied by the active oxygen supply device such that a concentration of HC in exhaust gas that flows into the NOx catalyst when it is determined that the temperature of the NOx catalyst is in the intermediate temperature range becomes higher than a concentration of HC in exhaust gas that flows into the NOx catalyst when it is determined that the temperature of the NOx catalyst is in the low temperature range.

According to the aforementioned construction, the amount of supply of active oxygen can be controlled such that the concentration of HC in exhaust gas that flows into the NOx catalyst in the intermediate temperature range becomes higher than the concentration of HC in exhaust gas that flows into the NOx catalyst in the low temperature range. In the low temperature range, the purification rate of NOx increases as the amount of HC flowing into the NOx catalyst approaches zero. On the other hand, in the intermediate temperature range, there is an optimal value of the amount of HC flowing into the NOx catalyst which maximizes the purification rate of NOx. Thus, according to the fifth invention, the purification rate of NOx can further be enhanced in both the low temperature range and the intermediate temperature range, and active oxygen can be more efficiently utilized, by controlling the concentration of HC in exhaust gas flowing into the NOx catalyst as described above.

Further, in the exhaust gas purification device according to this aspect of the invention, the low temperature range may be a temperature range in which the NOx catalyst is not activated, and the intermediate temperature range may range from a temperature at which the NOx catalyst begins to be activated to a temperature at which the NOx catalyst is sufficiently activated.

According to the above construction, the respective temperature ranges may be appropriately set. Therefore, active oxygen may be more efficiently used.

Further, in the exhaust gas purification device according to this aspect of the invention, the oxidation catalyst may contain Ag as a catalyst component.

According to the above construction, the oxidation catalyst contains Ag as a catalyst component. Thus, even if the temperature of the oxidation catalyst is low, CO can be sufficiently purified. That is, if active oxygen is available, the Ag exhibits sufficient CO oxidation activity even when the temperature of the oxidation catalyst is low. Thus, according to the seventh invention, even when the temperature of the oxidation catalyst is low, CO is reliably oxidized and purified by supplying active oxygen through the first supply port.

Further, the exhaust gas purification device according to this aspect of the invention may further include an oxidation catalyst temperature determination means for determining whether the temperature of the oxidation catalyst falls within a temperature range between a first temperature and a second temperature, which is higher than the first temperature; CO purification active oxygen amount calculation means for calculating an active oxygen amount for purifying CO when it is determined that the temperature of the oxidation catalyst is in the temperature range, and CO purification means for supplying the calculated amount of active oxygen through the first supply port.

According to the above construction, the supply of active oxygen for purifying CO may be controlled in accordance with the temperature of the oxidation catalyst. Thus, the amount of active oxygen used may be reduced while maintaining excellent CO purification performance.

Further, in the exhaust gas purification device according to this aspect of the invention, the first temperature may be a temperature at which Ag in the oxidation catalyst oxidizes CO when active oxygen is present, and the second temperature may be a temperature at which the oxidation catalyst oxidizes CO without recourse to active oxygen.

According to the above construction, the supply of active oxygen for purifying CO may be controlled while more appropriately determining whether the addition of active oxygen for purifying CO is effective. Accordingly, the amount of use of active oxygen may further be reduced while improving CO purification performance.

Further, the exhaust gas purification device according to this aspect of the invention may further include a silver (Ag) catalyst that is disposed downstream of the NOx catalyst and contains Ag as a catalyst component, a third supply port for supplying active oxygen to a region between the NOx catalyst and the Ag catalyst, reducing agent supply means for supplying a reducing agent to the NOx catalyst for reducing occluded the NOx , and means for supplying active oxygen from the third supply port when the reducing agent is supplied to the NOx catalyst.

According to the above construction, by causing the NOx catalyst to reduce occluded NOx, active oxygen is supplied to the Ag catalyst disposed downstream of the NOx catalyst. Thus, remaining CO that is not consumed through an NOx reduction reaction may be sufficiently purified by the Ag catalyst, and the discharge of CO into the atmosphere is reliably reduced.

Further, in the exhaust gas purification device according to this aspect of the invention, the active oxygen may be ozone.

According to the above construction, the effect is more remarkably exerted by using ozone as the active oxygen.

In the exhaust gas purification device according to this aspect of the invention, the predetermined intermediate temperature range may be 200 to 300 °C.

In the exhaust gas purification device according to this aspect of the invention, the first temperature may be 100 to 150 °C, and the second temperature may be 200 °C.

In the exhaust gas purification device according to this aspect of the invention, the unburned components may include HC, and the NOx catalyst may purify NOx through at least one of oxidative decomposition and occlusion of NOx.

### BRIEF DESCRIPTION OF THE DRAWINGS

The foregoing and further features and advantages of the invention will become apparent from the following description of example embodiments with reference to the accompanying drawings, wherein like numerals are used to represent like elements and wherein:
FIG. 1 shows a system configuration of an exhaust gas purification device according to the first embodiment of the invention;
FIG. 2 is a view showing how NOx is purified when ozone is supplied while the temperature of an NOx catalyst is in a low temperature range;
FIG. 3 is a view showing how NOx is purified when ozone is supplied while the temperature of the NOx catalyst is in an intermediate temperature range;
FIG. 4 is a graph showing a relationship between HC coexistence amount and NOx purification rate when the temperature of the NOx catalyst is in the low temperature range;
FIG. 5 is a graph showing a relationship between HC coexistence amount and NOx purification rate when the temperature of the NOx catalyst is in the intermediate temperature range;
FIG. 6 is a view showing a mechanism by which a recovery from HC poisoning of an oxidation catalyst is made through the addition of ozone;
FIG. 7 is a flowchart of a routine executed in the first embodiment of the invention;
FIG. 8 is a view comparing the total HC concentration at an outlet of the oxidation catalyst when ozone is added with a total HC concentration at the outlet of the oxidation catalyst in the case where no ozone is added;
FIG. 9 shows the relationship between the temperature of an Ag catalyst and the rate of purification of CO by the Ag catalyst;
FIG. 10 is a view showing a mechanism by which the Ag catalyst oxidizes CO under coexistence of ozone;
FIG. 11 is a view showing a relationship between the temperature of the oxidation catalyst and the amount of ozone added from the first ozone supply ports;
FIG. 12 is a view showing a relationship between the temperature of the NOx catalyst and the amount of ozone added from the second ozone supply ports;
FIG 13 is a flowchart of a routine executed in the second embodiment of the invention;
FIG 14 is a flowchart of a routine executed in the second embodiment of the invention; and
FIG 15 shows a system configuration of an exhaust gas purification device according to the third embodiment of the invention.

### DETAILED DESCRIPTION OF EMBODIMENTS

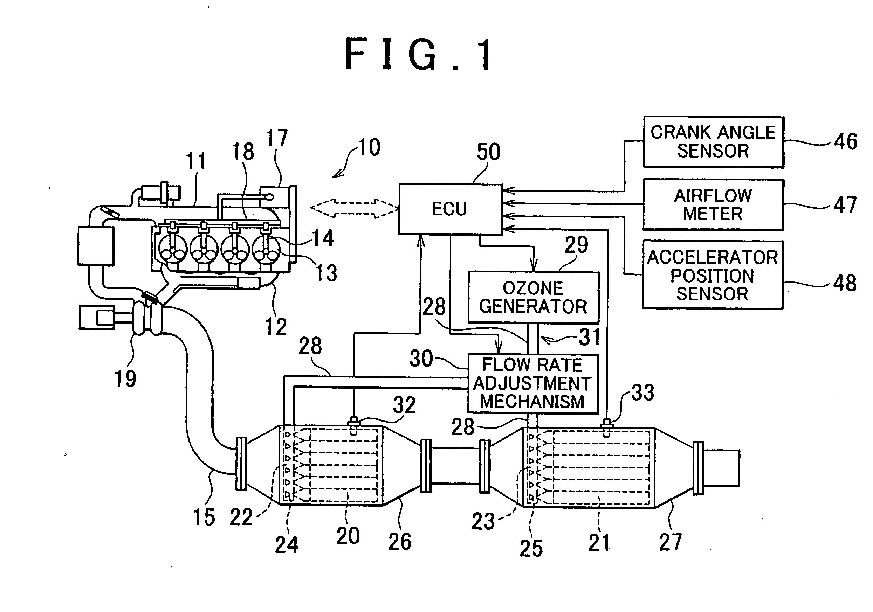

FIG. 1 is showing a system configuration of an exhaust gas purification device according to the first embodiment of the invention. As shown in FIG 1, the system according to this embodiment of the invention is equipped with an internal combustion engine 10. In this embodiment of the invention, the internal combustion engine 10 is a four-cylinder compression ignition type internal combustion engine (diesel engine) equipped with four cylinders 13. The internal combustion engine 10 according to this embodiment of the invention is equipped with a turbocharger 19. Intake air compressed by the compressor of the turbocharger 19 flows into the respective cylinders 13 via an intake manifold 11. The cylinders 13 are provided with fuel injectors 14 for directly injecting fuel into each cylinder respectively. High-pressure fuel accumulated in a common rail 18 is supplied to the respective fuel injectors 14. Fuel in a fuel tank (not shown) is pressurized by a supply pump 17 and supplied to the common rail 18. Exhaust gas discharged from each cylinder 13 gathers in an exhaust manifold 12 and flows into a turbine of the turbocharger 19. Exhaust gas that has flowed through the turbine flows through an exhaust passage 15.

An oxidation catalyst 20 and an NOx catalyst 21 are installed in the exhaust passage 15. The NOx catalyst 21 is disposed downstream of the oxidation catalyst 20. A first ozone supply nozzle 22 is provided upstream of the oxidation catalyst 20. A second ozone supply nozzle 23 is installed between the oxidation catalyst 20 and the NOx catalyst 21. In the configuration shown in FIG. 1, the first ozone supply nozzle 22 is disposed upstream of the oxidation catalyst 20 inside a casing 26 common to the oxidation catalyst 20. The second ozone supply nozzle 23 is disposed upstream of the NOx catalyst 21 inside a casing 27 common to the NOx catalyst 21.

The first ozone supply nozzle 22 is provided with a plurality of first ozone supply ports 24. The second ozone supply nozzle 23 is provided with a plurality of second ozone supply ports 25. An ozone generator 29 is connected to the first ozone supply nozzle 22 and the second ozone supply nozzle 23 via an ozone supply passage 28. An ozone generator designed to generate ozone (03) while causing dry air or oxygen as a raw material into a discharge tube to which high voltage can be applied, or an ozone generator of any other type may be employed as the ozone generator 29. It should be noted herein that dry air or oxygen as the raw material is gas drawn from a region outside the exhaust passage 15, for example, gas contained in outside air.

Flow flow rate adjustment mechanisms 30 is installed between the ozone generator 29 and the first ozone supply nozzle 22 and between the ozone generator 29 and the second ozone supply nozzle 23. The flow rate adjustment mechanism 30 may individually adjust the flow rate of ozone flowing into the first ozone supply nozzle 22 and the flow rate of ozone flowing into the second ozone supply nozzle 23. In this embodiment of the invention, , the first ozone supply nozzle 22, the second ozone supply nozzle 23, the ozone supply passage 28, the ozone generator 29, and the flow rate adjustment mechanism 30 constitute an ozone supply device 31.

According to the ozone supply device 31 as described above, ozone may be added into exhaust gas by generating ozone with the ozone generator 29 and injecting the ozone through the first ozone supply ports 24 and the second ozone supply ports 25. The ozone supplied from the first ozone supply ports 24 is added into exhaust gas upstream of the oxidation catalyst 20. The ozone supplied from the second ozone supply ports 25 is added into exhaust gas between the oxidation catalyst 20 and the NOx catalyst 21. The amount of the ozone supplied from the first ozone supply ports 24 and the amount of the ozone supplied from the second ozone supply ports 25 may be individually controlled by the flow rate adjustment mechanism 30.

The oxidation catalyst 20 purifies hydrocarbons (hereinafter referred to as "HC") by causing HC and carbon monoxide (CO) to react with 02 to turn them into CO2 and H2O. For example, Pt/CeO2, Mn/CeO2, Fe/CeO2, Ni/CeO2, Cu/CeO2, Pt/Al2O3, Pd/Al2O3, or the like may be used as a catalyst component of this oxidation catalyst 20.

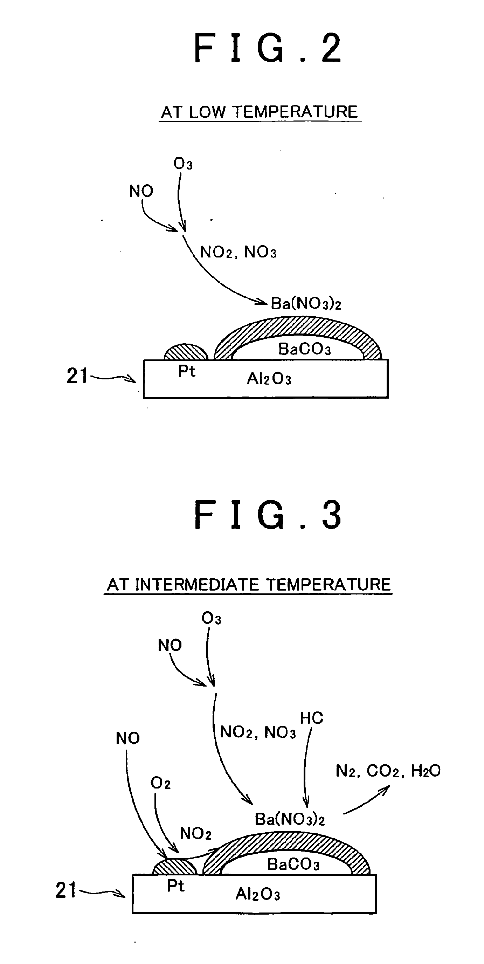

The NOx catalyst 21 according to this embodiment of the invention is an occlusion/reduction type NOx catalyst (NSR: NOx Storage Reduction). A catalyst component of the NOx catalyst 21 is composed of, for example, a noble metal such as platinum Pt or the like and an NOx occluding material carried on a surface of alumina (Al2O3). For example, at least one material selected from the alkali metals such as potassium K, sodium Na, lithium Li, or cesium Cs, the alkaline earth metals such as barium Ba or calcium Ca, and a rare earth metals such as lanthanum La or yttrium Y may be used as the NOx occluding material. In the NOx catalyst 21 according to this embodiment of the invention, as shown in FIG 2, Pt is used as the noble metal, and Ba is used as the NOx occluding material (hereinafter referred to simply as "the occluding material"). In the present specification, the term "occlusion" includes the concepts of "retention", "adsorption", and "absorption" and all the other concepts similar thereto.

The system according to this embodiment of the invention may further be equipped with a temperature sensor 32 to detect the temperature (bed temperature) of the oxidation catalyst 20, a temperature sensor 33 for detecting the temperature (bed temperature) of the NOx catalyst 21, and an electronic control unit (ECU) 50. In addition to the aforementioned components, namely, the fuel injectors 14, the ozone generator 29, and the temperature sensors 32 and 33, various sensors and actuators for controlling the internal combustion engine 10, such as a crank angle sensor 46, an airflow meter 47, an accelerator position sensor 48, and the like, are electrically connected to the ECU 50.

The occluding material of the NOx catalyst 21 absorbs nitrogen oxides (NOx) by forming nitrate salt (Ba(NO3)2 in this embodiment of the invention). Among NOx, NO2, NO3, and N2O5 may be absorbed well by the occluding material. On the other hand, most of the NOx originally contained in exhaust gas are nitrogen monoxide (NO). NO cannot be directly absorbed by the occluding material. In general, therefore, the noble metal (platinum Pt in this embodiment of the invention) serves as a catalyst in the NOx catalyst 21. NO in exhaust gas and oxygen 02 thereby react with each other to generate NO2, and the NO2 is absorbed by the occluding material.

However, the noble metal catalyst is not activated until it reaches an activation temperature (e.g., equal to or higher than 200 °C). Thus, when the temperature of the NOx catalyst 21 is low, for example, immediately after the startup of the internal combustion engine 10 or while travling at low speed, NO is not oxidized into NO2 by the noble metal catalyst. Therefore, NOx cannot be occluded.

In the system according to this embodiment of the invention, to restraining NOx from being discharged into the atmosphere when the temperature of the NOx catalyst 21 is low, ozone is added into exhaust gas from the second ozone supply ports 25 located upstream of the NOx catalyst 21. Ozone is highly oxidative. Thus, ozone and NOx react with each other at a low temperature such as a room temperature. By causing NOx to react with ozone, NOx may be absorbed by the occluding material of the NOx catalyst 21 as will be described below.

FIG. 2 shows how NOx is purified (absorbed) when ozone is supplied while the NOx catalyst 21 before the noble metal catalyst reaches the activation temperature. If ozone is supplied, NO in exhaust gas reacts with ozone and is thereby turned into NO2, NO3, or N2O5. The occluding material Ba can sufficiently absorb NO2, NO3, and N2O5 at low temperatures such as a room temperature, and form nitrate salt. Thus, even in the low temperature range below the activation temperature of the noble metal catalyst, NOx may be absorbed by the occluding material through the supply of ozone. That is, the discharge of NOx into the atmosphere can be suppressed.

When the temperature of the NOx catalyst 21 becomes equal to or above a certain temperature (e.g., equal to or higher than 200 °C), the noble metal catalyst is activated and becomes capable of causing NO in exhaust gas and oxygen 02 to react with each other to turn them into NO2. However, the noble metal catalyst is not sufficiently activated until the temperature of the NOx catalyst 21 becomes sufficiently high (e.g., 300 °C). Therefore, NO in exhaust gas cannot be entirely turned into NO2 by the catalyst. Thus, part of the NO permeates the NOx catalyst 21 unless ozone is supplied. Accordingly, even after the temperature of the NOx catalyst 21 exceeds the activation temperature of the noble metal catalyst (e.g., 200 °C), it is preferable to continue supplying ozone until the temperature of the NOx catalyst 21 reaches a temperature at which the NOx catalyst 21 is sufficiently activated (e.g., 300 °C).

FIG 3 shows how NOx is purified when zone is supplied while the temperature of the NOx catalyst 21 falls within a range in which the noble metal catalyst has begun to be activated but is not sufficiently activated. When the temperature of the NOx catalyst 21 is in the intermediate temperature range, the Pt catalyst is partially activated. Thus, as shown in FIG 3, part of the NO in exhaust gas may be reacted with oxygen 02 and turned into NO2 by the Pt catalyst, and thus absorbed by the occluding material. However, the NO that cannot be treated by the Pt catalyst reacted with ozone in the gas phase and turned into NO2, NO3, or N2O5, and can thereby be absorbed by the occluding material.

Further, according to the knowledge of the inventors, it is confirmed that a selective reduction reaction of NOx by HC occurs in parallel if HC coexist in the case where the occlusion of NOx is promoted by supplying ozone when the temperature of the NOx catalyst 21 is in the intermediate temperature range. That is, as shown in FIG 3, when HC coexist, a reaction in which NOx is reduced by HC and purified into N2, CO2, and H2O occurs in parallel with an occlusion reaction of NOx. Thus, the purification rate of NOx can further be enhanced.

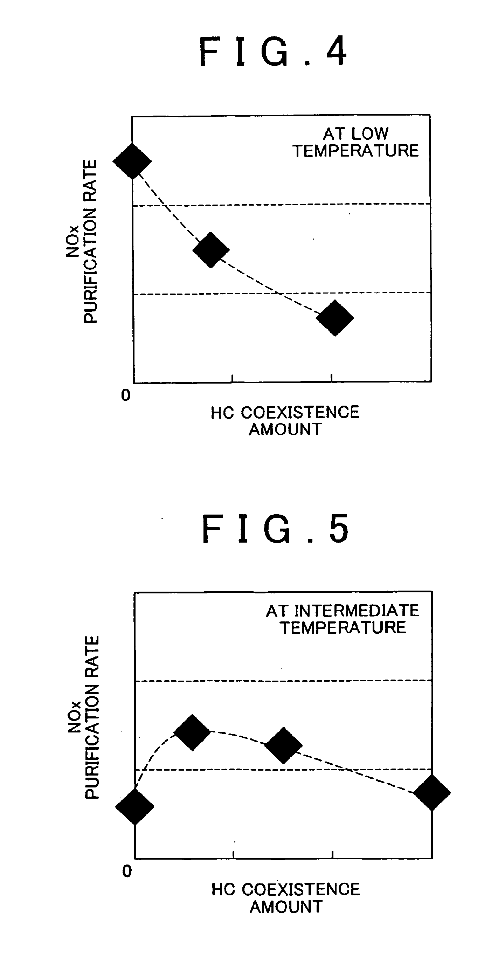

On the other hand, according to the knowledge of the inventors, the coexistence of HC is not preferred in the case where the occlusion of NOx is promoted by supplying ozone when the temperature of the NOx catalyst 21 is in the low temperature range. FIG. 4 is a graph showing a relationship between the coexistence amount of HC and the purification rate of NOx at the time when the temperature of the NOx catalyst 21 is in the low temperature range. As shown in FIG. 4, when the temperature of the NOx catalyst 21 is in the low temperature range, the purification rate of NOx is at its maximum in the case where the coexistence amount of HC is zero. The purification rate of NOx decreases as the coexistence amount of HC increases. The reason for this is considered to be as follows. When the temperature of the NOx catalyst 21 is in the low temperature range, namely, when the NOx catalyst 21 is not activated, the selective reduction reaction as described above does not occur even in the presence of HC. On the other hand, in the presence of HC, the HC react with ozone and are purified into CO2 and H2O. That is, in the presence of HC in the NOx catalyst 21, ozone is consumed through a reaction with the HC, and hence the amount of reaction between NO and ozone decreases correspondingly. As a result, the absorption amount of NOx decreases, and the purification rate of NOx is considered to decrease.

On the other hand, when the temperature of the NOx catalyst 21 is in the intermediate temperature range, the purification rate of NOx can be enhanced in the case where a certain amount of HC exist. FIG 5 is a graph showing a relationship between the coexistence amount of HC and the purification rate of NOx at the time when the temperature of the NOx catalyst 21 is in the intermediate temperature range. As shown in FIG 5, when the temperature of the NOx catalyst 21 is in the intermediate temperature range, there is an optimal value of the coexistence amount of HC that maximizes the purification rate of NOx. This is considered to be attributed to the fact that the selective reduction reaction of NOx by HC occurs in parallel with the occlusion reaction of NOx in the presence of HC as described above. Then, when the coexistence amount of HC becomes larger than the aforementioned optimal value, the purification rate of NOx gradually decreases. This is considered to be attributed to the fact that the absorption amount of NOx decreases as a result of the consumption of ozone through a reaction with HC as in the case of the aforementioned low temperature range.

The oxidation catalyst 20 installed upstream of the NOx catalyst 21 has a oxidizes and removes HC as described above. However, immediately after the startup of the internal combustion engine 10 or when traveling at low speed, the temperature of exhaust gas is extremely low, which causes a reduction in the activity of the oxidation catalyst 20 due to the adsorption of HC by the noble metal of the oxidation catalyst 20, namely, HC poisoning is likely to occur. If the oxidation catalyst 20 suffers HC poisoning, the amount of HC permeating the oxidation catalyst 20 and flowing into the NOx catalyst 21 increases. If the amount of HC present in the NOx catalyst 21 is large, the purification rate of NOx decreases as described above. In this case, in order to obtain a sufficient purification rate of NOx, the HC present in the NOx catalyst 21 need to be caused to react with ozone and be removed by increasing the amount of ozone supplied from the second ozone supply ports 25. However, when the amount of ozone supplied is increased, the amount of electric power consumed by the ozone generator 29 increases. Therefore, there is a problem of a deterioration in fuel consumption.

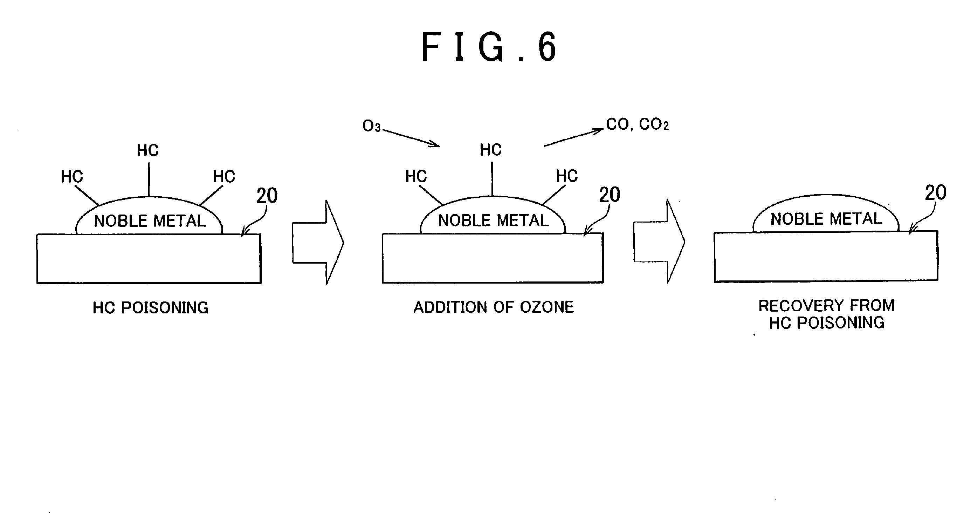

Thus, in this embodiment of the invention, to recover the oxidation catalyst 20 from HC poisoning, ozone is supplied into the oxidation catalyst 20 by adding ozone from the first ozone supply ports 24. FIG. 6 is a view showing the addition of ozone to regenerate the oxidation catalyst 20 from HC poisoning. As shown in FIG 6, when the activity of the oxidation catalyst 20 is lost due to the adsorption of HC on the noble metal of the oxidation catalyst 20, the adsorbed HC reacts with ozone and turns into CO, CO2, and H2O and are thereby removed. Thus, the oxidation catalyst 20 is recovered from suffering HC poisoning, and the activity thereof can be recovered. As a result, HC is removed through the activity of the oxidation catalyst 20 and hence be restrained from flowing into the NOx catalyst 21. Thus, the amount of ozone that needs to be added from the second ozone supply ports 25 to remove HC in the NOx catalyst 21 is small. Therefore, the amount of ozone consumption is reduced overall, and fuel efficiency is improved. Further, the coexistence amount of HC in the NOx catalyst 21 is reliably prevented from increasing. Therefore, the purification rate of NOx in the NOx catalyst 21 may be enhanced.

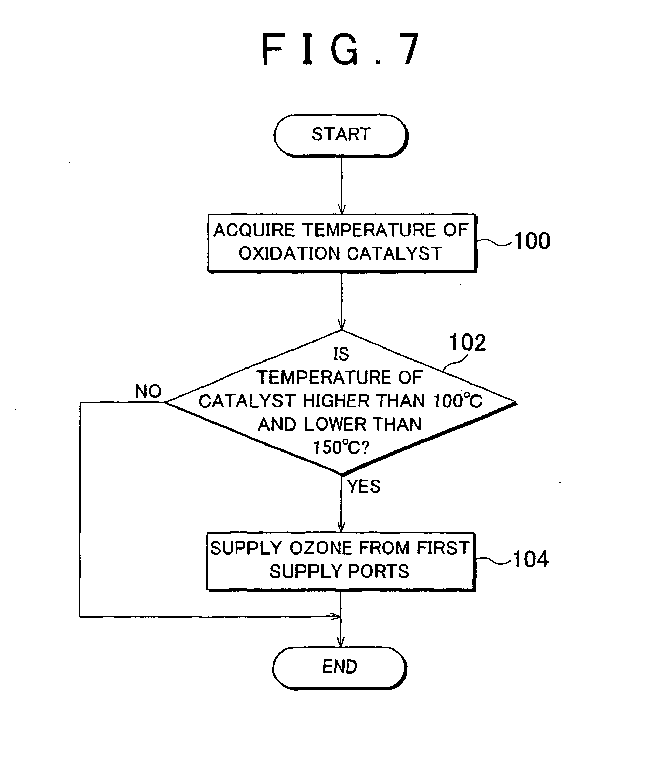

FIG 7 is a flowchart of a routine executed by the ECU 50 in this embodiment of the invention to implement the aforementioned function. According to the routine shown in FIG. 7, first, the temperature of the oxidation catalyst 20 is acquired (step 100). In this embodiment of the invention, the temperature of the oxidation catalyst 20 may be acquired based on an output of the temperature sensor 32. However, in the invention, the temperature of the oxidation catalyst 20 may also be estimated on based on the operation state of the internal combustion engine 10 (engine rotational speed, load, temperature of exhaust gas, or the like).

Then, it is determined whether the temperature of the oxidation catalyst 20 is in a predetermined temperature range (100 to 150 °C in this embodiment of the invention) (step 102). In this step 102, if it is determined that the temperature of the oxidation catalyst 20 falls in the predetermined temperature range, it is determined that the oxidation catalyst 20 suffers HC poisoning. Thus, in this case, with a view to making a recovery from the HC poisoning, the ozone supply device 31 is controlled such that ozone is supplied from the first ozone supply ports 24 (step 104).

However, when the temperature of the oxidation catalyst 20 is equal to or higher than 150 °C, it may be determined that the HC adsorbed on the noble metal of the oxidation catalyst 20 have been oxidized and removed due to the activity of the noble metal. Further, if the temperature of the oxidation catalyst 20 is equal to or below 100 °C, the activation temperature of the oxidation catalyst 20 has not been reached yet. Therefore, it may be determined that the HC adsorbed on the noble metal cannot be purified by the oxidation catalyst 20 even when the HC are removed. Accordingly, if it is determined that the temperature of the oxidation catalyst 20 is not in the aforementioned temperature range (100 to 150 °C), it is determined that the activity of the oxidation catalyst 20 has not decreased due to the HC poisoning thereof. As a result, no ozone is supplied from the first ozone supply ports 24.

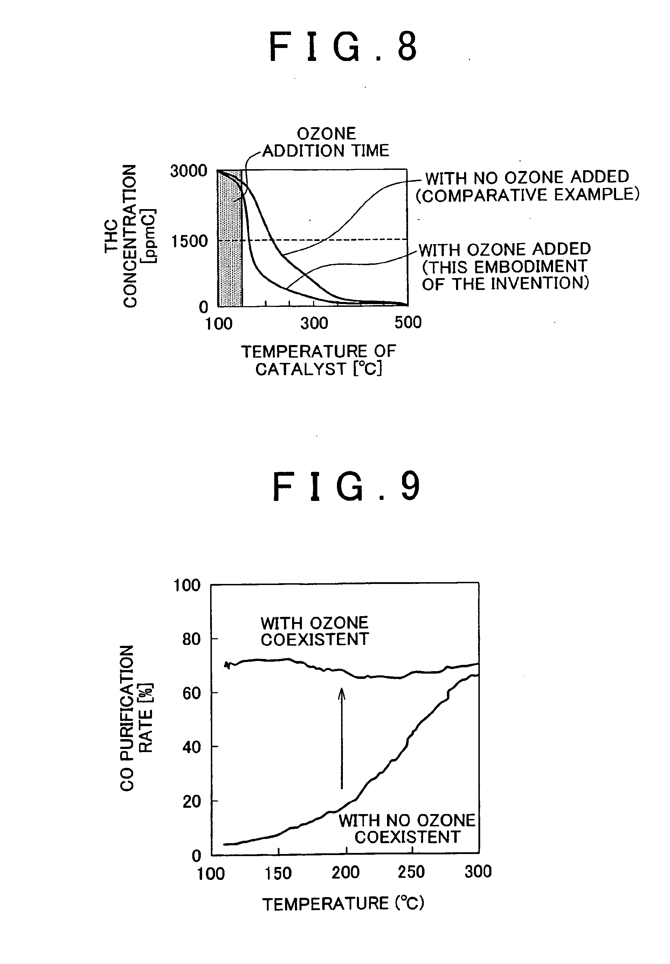

FIG 8 compares the total HC concentration [ppmC] at an outlet of the oxidation catalyst 20 when ozone is added to recover the oxidation catalyst 20 from HC poisoning (this embodiment of the invention) with a total HC concentration [ppmC] at the outlet of the oxidation catalyst 20 when no ozone is added (comparative example). By supplying ozone from the first ozone supply ports 24 according to the routine shown in FIG 7, a recovery of the oxidation catalyst 20 from HC poisoning can be made, and the intrinsic activity of the oxidation catalyst 20 can be exerted. Accordingly, as shown in FIG 8, the amount of HC permeating the oxidation catalyst 20 is sufficiently reduced. Thus, the purification rate of NOx in the NOx catalyst 21 may be enhanced. Further, the amount of ozone that needs to be added from the second ozone supply ports 25 may be reduced, and the amount of ozone consumed is reduced. Therefore, fuel economy may be improved.

Although the determination on HC poisoning of the oxidation catalyst 20 is made on the basis of the temperature of the oxidation catalyst 20 (the aforementioned step 102), a determination on HC poisoning of the oxidation catalyst 20 may be made on the basis of the temperature of exhaust gas in the invention.

Further, this embodiment of the invention has been described on the assumption that the internal combustion engine 10 is a compression ignition type internal combustion engine. However, the invention is also applicable to a spark ignition type internal combustion engine. Further, in this embodiment of the invention, ozone as active oxygen is added into exhaust gas. In the invention, however, other types of active oxygen (e.g., oxygen minus ions expressed by O-, O2-, O2-, O3-, On-, and the like) may also be added into exhaust gas. Further, in the ozone supply device 31 according to this embodiment of the invention, ozone generated by the ozone generator 29 is distributed to the first ozone supply nozzle 22 and the second ozone supply nozzle 23 by the flow rate adjustment mechanism 30. However, an ozone generator may be provided individually for each of the first ozone supply nozzle 22 and the second ozone supply nozzle 23. Further, the ozone supply device 31 according to this embodiment of the invention is constructed such that ozone generated by the ozone generator 29 is directly supplied into the exhaust passage 15. In the invention, however, ozone may be generated and stored in advance and supplied into the exhaust passage 15 when necessary. Further, although this embodiment of the invention has been described on the assumption that the NOx catalyst 21 is the occlusion/reduction type NOx catalyst. However, the invention may also be applied to a case where the NOx catalyst 21 is a selective reduction type NOx catalyst (SCR: Selective Catalytic Reduction). For example, a catalyst having Fe carried on the surface of zeolite may be employed as the selective reduction type NOx catalyst. In the case of the selective reduction type NOx catalyst, a reducing agent such as urea or the like may be used. In the selective reduction type NOx catalyst, the best purification rate is obtained when the ratio between the amount of NO and the amount of NO2 is 1:1. Thus, in the case of the selective reduction type NOx catalyst, it is preferable to control the amount of supply of active oxygen such that the ratio between the amount of NO and the amount of NO2 in the selective reduction type NOx catalyst becomes equal to 1:1 in a low temperature range or an intermediate temperature range. Further, the aforementioned respective remarks hold true for the later-described embodiments of the invention as well.

In the first embodiment of the invention, the ozone supply device 31 is an example of "the active oxygen supply device" in the invention. Further, "the HC poisoning determination means" in the first invention is realized through the performance of the aforementioned processings in step 100 and step 102 by the ECU 50, and "the HC poisoning recovery means" in the first invention is realized through the performance of the aforementioned processing in step 104 by the ECU 50.

Next, the second embodiment of the invention will be described with reference to FIGS. 9 to 14. The description will mainly focus attention on what is different from the first embodiment of the invention, and what is similar thereto will be described simply or not be described at all.

The hardware configuration according to this embodiment of the invention is substantially identical to the aforementioned configuration shown in FIG. 1. In this embodiment of the invention, however, Ag (silver) is further added as a catalyst component.

In this embodiment of the invention as well as the first embodiment of the invention, the absorption of NOx is promoted by adding ozone from the second ozone supply ports 25 in a temperature range in which the noble metal catalyst in the NOx catalyst 21 is not sufficiently activated.

Further, the oxidation catalyst 20 is not sufficiently activated and cannot sufficiently oxidize HC and CO in exhaust gas either unless the temperature thereof reaches at least a certain temperature (e.g., equal to or higher than 200 °C). Thus, in this embodiment of the invention, ozone is added from the first ozone supply ports 24 to facilitate sufficient purification of HC immediately after the startup of the internal combustion engine 10 or when traveling at low speed while the temperature of the catalyst is low. Thus, HC may be oxidized with ozone and purified.

However, the reactivity of CO and ozone is lower than the reactivity of NO or HC and ozone. Thus, it is difficult to sufficiently purify (oxidize) CO by causing ozone and CO to react with each other in a gas phase.

It has been determined that a catalyst containing Ag (hereinafter referred to as "the Ag catalyst") may be activated to oxidize CO at low temperatures in the presence of ozone. FIG 9 is a view showing a relationship between the temperature of the Ag catalyst and the rate of purification of CO by the Ag catalyst. As shown in this FIG. 9, if ozone is not present, the purification rate of CO below 300 °C is low. On the other hand, if ozone is present, the purification rate of CO in a low temperature range is drastically enhanced, and CO is sufficiently purified at low temperatures, such as from about 100 °C.

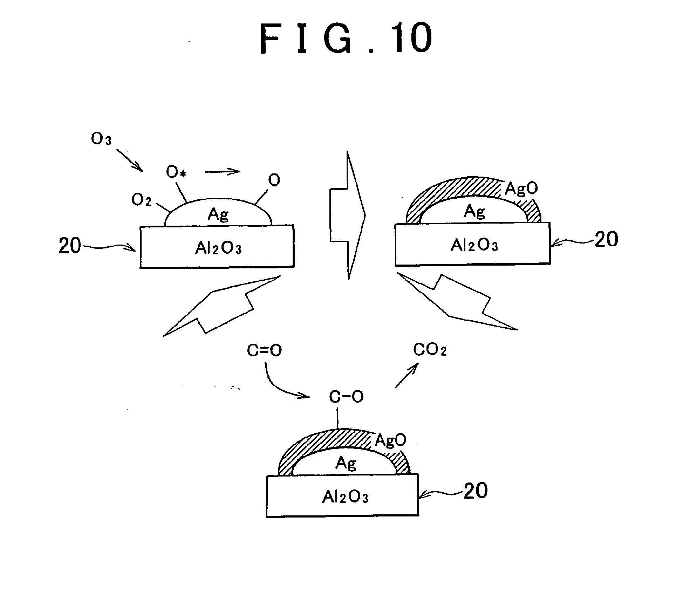

The mechanism by which the Ag catalyst oxidizes CO in the presence of ozone is considered to be the one shown in FIG. 10. That is, Ag reacts with ozone to form Ag2O or AgO, which is a more powerful oxidizing agent. It is believed that CO is oxidized into CO2 by the Ag2O or AgO.

In this embodiment of the invention, CO cannot be oxidized through the activity of the oxidation catalyst 20 alone when the temperature of the catalyst is low, thus, ozone is supplied to the oxidation catalyst 20 by adding ozone from the first ozone supply ports 24. Thus, CO is oxidized and purified by the Ag catalyst in the oxidation catalyst 20.

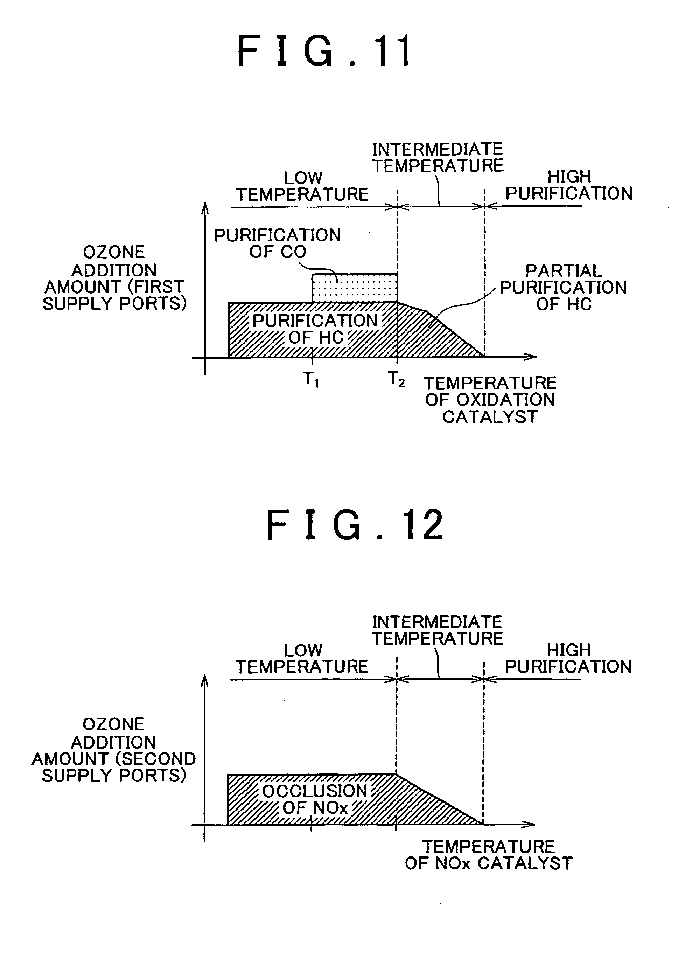

In view of the foregoing and what has been described in the first embodiment of the invention, the amounts of ozone added from the first ozone supply ports 24 and the second ozone supply ports 25 are controlled as follows in this embodiment of the invention. FIG 11 shows the relationship between the temperature of the oxidation catalyst 20 and the amount of ozone added from the first ozone supply ports 24. First, the control of the supply of ozone from the first ozone supply ports 24 will be described with reference to FIG 11.

If the temperature of the oxidation catalyst 20 is falls within the range in which the noble metal catalyst is not activated, ozone is supplied from the first ozone supply ports 24 in an amount needed to purify HC. In the low temperature range, HC is hardly oxidized through the activity of the oxidation catalyst 20. Further, as described above, in order to enhance the purification rate of NOx at low temperatures, it is preferable to make the amount of HC permeating the oxidation catalyst 20 and flowing into the NOx catalyst 21 as close to zero as possible. Thus, it is preferable to set "the amount of ozone needed to purify HC" to the amount of ozone that makes it possible to remove HC almost entirely.

Further, if the temperature of the oxidation catalyst 20 falls between a first temperature T1 and a second temperature T2, ozone is further supplied from the first ozone supply ports 24 in an amount needed to purify CO as well as the amount needed to purify HC. The first temperature T1 is a temperature at which the Ag catalyst in the oxidation catalyst 20 is activated to oxidize CO in the presence of ozone, and is set to, for example, about 100 to 150 °C. At a temperature below the first temperature T1, it is difficult to efficiently purify CO even by the Ag catalyst and ozone. Accordingly, in order to conserve the amount of ozone, no ozone is supplied to purify CO. The second temperature T2 is a temperature at which CO may be purified through the activity of the oxidation catalyst 20 itself (i.e., without ozone), and is set to, for example, about 200 °C. CO can be purified by the oxidation catalyst 20 at a lower temperature than HC. Thus, in a range higher than the second temperature T2, it can be determined that CO is sufficiently purified by the oxidation catalyst 20. Thus, in a range higher than the second temperature T2, no ozone is supplied to purify CO to conserve the amount of ozone.

If the temperature of the oxidation catalyst 20 falls in an intermediate temperature range (a range from a temperature at which the noble metal catalyst begins to be activated to a temperature at which the noble metal catalyst is sufficiently activated), ozone is supplied from the first ozone supply ports 24 in an amount needed to purify part of HC. In the intermediate temperature range, part of HC is purified through the activity of the oxidation catalyst 20 itself. Further, at intermediate temperatures, as described above, there is an optimal value of the coexistence amount of HC in the NOx catalyst 21, which maximizes the purification rate of NOx. Thus, it is most desirable to cause HC to flow into the NOx catalyst 21 in an appropriate amount instead of making the amount of HC permeating the oxidation catalyst 20 equal to zero. Thus, the "amount of ozone needed to purify part of HC" is set to an amount of ozone that makes it possible to purify the remaining HC, namely, the HC other than the HC purified through the activity of the oxidation catalyst 20 itself and the HC whose amount is optimal to be caused to flow into the NOx catalyst 21.

As shown in FIG 11, in this embodiment of the invention, the second temperature T2 is equal to a boundary temperature between the low temperature range and the intermediate temperature range. In the invention, however, these temperatures may be set different from each other.

When the temperature of the oxidation catalyst 20 is in the high temperature range (the range equal to or above a temperature at which the noble metal catalyst is sufficiently activated), the supply of ozone from the first ozone supply ports 24 is stopped. In the high temperature range (e.g., equal to or above 300 °C), ozone is likely to be thermally decomposed. Thus, even if ozone is supplied, the resulting effect is minimal. Further, in the high temperature range, even if no ozone is supplied, HC and CO are sufficiently purified in the oxidation catalyst 20. Hence, in the high temperature range, the supply of ozone from the ozone supply ports 24 is stopped. Thus, the amount of ozone consumption is reduced, and fuel economy is improved.

FIG. 12 shows the relationship between the temperature of the NOx catalyst 21 and the amount of ozone added from the second ozone supply ports 25. Next, the control of the supply of ozone from the second ozone supply ports 25 will be described with reference to FIG 12.

If the temperature of the NOx catalyst 21 falls below the range in which the noble metal catalyst is not activated, ozone is supplied from the second ozone supply ports 25 in an amount needed to purify (absorb) NOx. In the low temperature range, it is almost impossible to expect the noble metal catalyst in the NOx catalyst 21 to oxidize NO into NO2. Therefore, it is desirable to oxidize the entire NO discharged from the internal combustion engine 10 through ozone into forms absorbable by the occluding material (N02, NO3, N2O5). Thus, the "amount of ozone needed to purify NOx" may be set to the amount of ozone necessary to oxidize almost the entire NO discharged from the internal combustion engine 10 into the forms absorbable by the occluding material.

If the temperature of the NOx catalyst 21 is in the intermediate temperature range (the range from a temperature at which the noble metal catalyst begins to be activated to a temperature at which the noble metal catalyst is sufficiently activated), ozone is supplied from the second ozone supply ports 25 in an amount needed to purify (absorb) NOx. In the intermediate temperature range, the noble metal catalyst in the NOx catalyst 21 is partially activated. Thus, a portion of NO is oxidized to NO2 by the noble metal catalyst and absorbed by the occluding material. Accordingly, the amount of ozone needed to purify NOx is less than in the low temperature range. In view of the foregoing, as shown in FIG. 12, the amount of ozone needed to purify NOx is less in the intermediate temperature range than in the low temperature range.

If the temperature of the NOx catalyst 21 falls within the range equal to or higher than a temperature at which the noble metal catalyst is sufficiently activated, the supply of ozone from the second ozone supply ports 25 is stopped. In the high temperature range (e.g., equal to or above 300 °C), ozone is likely to be thermally decomposed. Thus, even when ozone is supplied, the effect resulting therefrom is not powerful. Further, in the high temperature range, NOx is sufficiently purified in the NOx catalyst 21 even if no ozone is supplied. Accordingly, there is little need to supply ozone for purifying NOx. Thus, in the high temperature range, the supply of ozone from the second ozone supply ports 25 is stopped. Thus, the amount of ozone consumed may be reduced, and fuel efficiency may be improved.

As for the hardware configuration of this embodiment of the invention, a configuration in which the Ag catalyst for purifying CO is included in the NOx catalyst 21 is also conceivable. However, for the following reason, it is more desirable for the Ag catalyst to be included in the oxidation catalyst 20 as in this embodiment of the invention than in the NOx catalyst 21. The Ag catalyst has a property of decomposing ozone and high oxide NOx (NO3, N2O5). Thus, when Ag is contained in the NOx catalyst 21, the ozone added to purify NOx and the high oxide NOx generated through a reaction of ozone and NO are likely to be decomposed. When the ozone added to purify NOx is decomposed, the absorption of NOx is hindered. Further, the high oxide NOx is in a form easily absorbable by the occluding material. Therefore, the decomposition of the high oxide NOx also hinders the absorption of NOx. On the other hand, according to the hardware configuration in this embodiment of the invention, the Ag catalyst is included in the oxidation catalyst 20. Therefore, the ozone added to purify NOx (i.e., the ozone added from the second ozone supply ports 25) and the high oxide NOx do not contact the Ag catalyst. Therefore, the decomposition of these substances can be reliably prevented. As a result, the effect of promoting the absorption of NOx by ozone is enhanced, and the permeation by NOx can be reliably prevented.

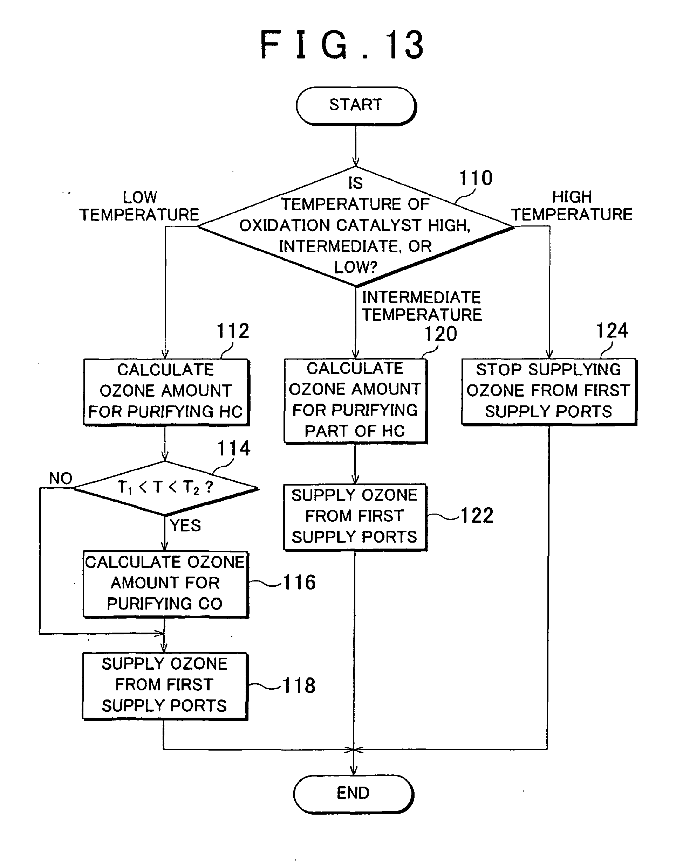

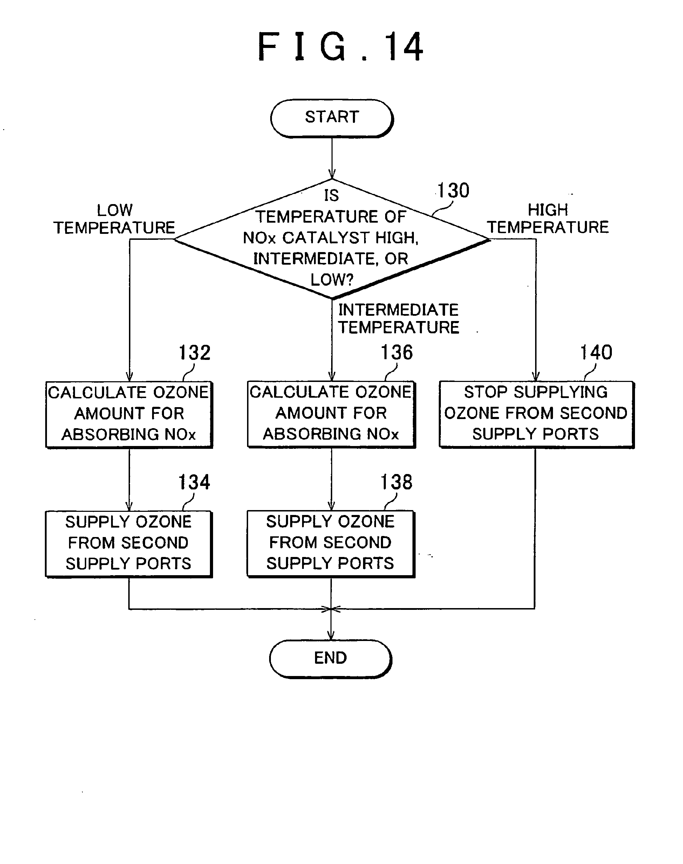

FIGS. 13 and 14 are flowcharts of routines executed by the ECU 50 in this embodiment of the invention to implement the aforementioned function. FIG 13 is a routine for controlling the supply of ozone from the first ozone supply ports 24. According to this routine, it is first determined whether the temperature of the oxidation catalyst 20 is in the low temperature range (e.g., below 200 °C), in the intermediate temperature range (e.g., 200 to 300 °C), or in the high temperature range (e.g., equal to or above 300 °C) (step 110). In this embodiment of the invention, the determination in this step 110 is made based on the output of the temperature sensor 32. In the invention, the determination in step 110 may also be made by estimating the temperature of the oxidation catalyst 20 based on the operation state of the internal combustion engine 10 (engine rotational speed, load, exhaust gas temperature, or the like), without recourse to the temperature sensor.

If it is determined in step 110 that the temperature of the oxidation catalyst 20 is in the low temperature range, the amount of ozone for purifying HC is first calculated (step 112). In this embodiment of the invention, the HC discharge amount map created by empricially determining the relationship between the operation state of the internal combustion engine 10 and the amount of HC in exhaust gas is stored in the ECU 50. In step 112, the amount of HC discharged from the internal combustion engine 10 is first calculated based on the HC discharge amount map. Then, the amount of ozone that needs to be added to react with HC is calculated according to a predetermined calculation method based on the calculated HC discharge amount.

After step 112, it is determined whether the temperature T of the oxidation catalyst 20 (Ag catalyst) falls between the first temperature T1 and the second temperature T2 (step 114). If it is determined as a result that the temperature T of the oxidation catalyst 20 is between the first temperature T1 and the second temperature T2, the amount of ozone required for purifying CO is calculated (step 116). In this embodiment of the invention, a CO discharge amount map created by empirically determining the relationship between the operation state of the internal combustion engine 10 (engine rotational speed, load, coolant temperature, or the like) and the amount of CO in exhaust gas, and a CO purification rate map created by empirically determining the relationship with the rate of purification of CO by the Ag catalyst in the presence of ozone are stored in the ECU 50. In step 116, the amount of CO discharged from the internal combustion engine 10 is first calculated based on the CO discharge amount map, and the CO purification rate is calculated based on the CO purification rate map. Then, the amount of ozone that needs to be added to for the Ag catalyst in the oxidation catalyst 20 to oxidize CO is calculated according to a predetermined calculation method based on the calculated CO discharge amount and the calculated CO purification rate.

On the other hand, if it is determined in step 114 that the temperature T of the oxidation catalyst 20 does not fall between the first temperature T1 and the second temperature T2, it may be determined that the Ag catalyst in the oxidation catalyst 20 has not reached the temperature corresponding to the activity for oxidizing CO in the presence of ozone, and that the effect is not obtained even when ozone for purifying CO is added. Thus, in this case, the amount of ozone for purifying CO is set to zero with a view to saving the amount of ozone.

After step 114 or step 116, the control for driving the ozone supply device 31 is executed such that ozone is supplied from the first ozone supply ports 24 (step 118). In this step 118, if the amount of ozone for purifying CO is calculated in step 116, the first ozone supply ports 24 is controlled to supply an amount of ozone equal to the sum of the amount of ozone required for purifying CO and the amount of ozone required for purifying HC calculated in step 112. However, if the amount of ozone for purifying CO is not calculated, the first ozone supply ports 24 is controlled to supply an amount of ozone equal to the amount supplied to purify the HC calculated in step 112.

If it is determined in step 110 that the temperature of the oxidation catalyst 20 is in the intermediate temperature range, it is determined that CO may be sufficiently oxidized by the oxidation catalyst 20 without using ozone. Therefore, in this case, there is no need to supply ozone to purify CO, and hence, the process of calculating the amount of ozone for purifying CO is not performed. In this case, an amount of ozone for purifying part of HC is first calculated (step 120). In this embodiment of the invention, an HC purification rate map created by empirically determining the relationship between the temperature of the oxidation catalyst 20 and the purification rate of HC in the oxidation catalyst 20, and an optimal amount of HC flowing into the NOx catalyst 21 (an HC inflow amount that maximizes the purification rate of NOx) are stored in the ECU 50. In step 120, the amount of HC discharged from the internal combustion engine 10 is calculated based on the HC discharge amount map. Then, the amount of HC to be purified by ozone is calculated by subtracting the amount of HC purified in the oxidation catalyst 20, calculated based on the HC purification rate map, and the optimal amount of HC flowing into the NOx catalyst 21 from the HC discharge amount. Then, the amount of ozone that needs to be added to react with that amount of HC is calculated according to a predetermined calculation method.

If the amount of ozone for purifying part of HC is calculated in step 120, the control to drive the ozone supply device 31 is executed so that the calculated amount of ozone is supplied from the first ozone supply ports 24 (step 122).

However, if it is determined in step 110 that the temperature of the oxidation catalyst 20 is in the high temperature range, it may be determined that HC and CO are sufficiently purified by the oxidation catalyst 20 even if no ozone is supplied from the first ozone supply ports 24. Thus, in this case, the supply of ozone from the first ozone supply ports 24 is stopped (step 124).

FIG 14 is a routine for controlling the supply of ozone from the second ozone supply ports 25. According to the routine shown in FIG. 14, it is first determined whether the temperature of the NOx catalyst 21 is in the low temperature range (e.g., below 200 °C), in the intermediate temperature range (e.g., 200 to 300 °C), or in the high temperature range (e.g., equal to or above 300 °C) (step 130). In this embodiment of the invention, the determination in this step 130 is made based on the output of the temperature sensor 33. In the invention, however, the determination in step 130 may also be made by estimating the temperature of the NOx catalyst 21 based on the operation state of the internal combustion engine 10 (engine rotational speed, load, exhaust gas temperature, or the like), without recourse to the temperature sensor.

If it is determined in step 130 that the temperature of the NOx catalyst 21 is in the low temperature range, the amount of ozone for purifying (absorbing) NOx is calculated (step 132). In this embodiment of the invention, an NOx discharge amount map created by empirically determining the relationship between the operation state of the internal combustion engine 10 and the amount of NOx in exhaust gas is stored in the ECU 50. In step 108, the amount of NOx discharged from the internal combustion engine 10 is first calculated based on the NOx discharge amount map. Then, an amount of ozone that needs to be added to react with NOx is calculated according to a predetermined calculation method based on the calculated NOx discharge amount.

Then, the control for driving the ozone supply device 31 is executed such that the amount of ozone calculated in step 132 is supplied from the second ozone supply ports 25(step 134).

If it is determined in step 130 that the temperature of the NOx catalyst 21 is in the intermediate temperature range, the amount of ozone for purifying (absorbing) NOx is calculated (step 136). In this embodiment of the invention, a map created by empirically determining the relationship between the temperature of the NOx catalyst 21 and the purification rate of the NOx that may be purified at the temperature without using ozone is stored in the ECU 50. In step 136, the amount of NOx that can be purified without using ozone is first calculated based on the map. Then, the amount of NOx to be purified using ozone is calculated by subtracting the amount of NOx that can be purified without using ozone from the discharge amount of NOx calculated based on the NOx discharge amount map. Then, the amount of ozone that needs to be added to react with that amount of NOx is calculated according to a predetermined calculation method.

Then, the control to drive the ozone supply device 31 is executed such that the amount ozone calculated in step 136 is supplied from the second ozone supply ports 25(step 138).

However, if it is determined in step 130 that the temperature of the NOx catalyst 21 is in the high temperature range, it may be determined that NOx can be sufficiently purified by the NOx catalyst 21 even without supplying ozone from the second ozone supply ports 25. Thus, in this case, the supply of ozone from the second ozone supply ports 25 is stopped (step 140).

As described above, according to this embodiment of the invention, even if the temperature of the oxidation catalyst 20 or the NOx catalyst 21 is low, for example, immediately after the startup of the internal combustion engine 10 or when traveling at low-speed, the respective pollutants, namely, HC, CO, and NOx may be sufficiently purified by adding ozone into exhaust gas through the ozone supply device 31. Thus, pollutants are reliably restrained from being discharged into the atmosphere.

In particular, according to this embodiment of the invention, the amounts of ozone for purifying the respective components, namely, HC, CO, and NOx are calculated respectively in accordance with the temperatures of the oxidation catalyst 20 and the NOx catalyst 21, and the amounts of ozone supplied from the first ozone supply ports 24 and the second ozone supply ports 25 may be controlled respectively based on those amounts of ozone. Thus, ozone may be supplied to the oxidation catalyst 20 and the NOx catalyst 21 respectively in just proportion. That is, the amount of ozone supplied may be prevented from becoming insufficient, and the respective pollutants are therefore purified more reliably. Further, it is possible to avoid supplying an excessive amount of ozone. Therefore, ozone can be reliably restrained from permeating the catalyst to be discharged into the atmosphere, and the amount of electric power consumed to generate ozone isminimized. As a result, fuel efficiency may be improved.

In this embodiment of the invention, the supply of ozone is stopped in the high temperature range. In the invention, however, the amount of ozone supplied may simply be reduced instead of completely eliminated in the high temperature range.

In the first embodiment of the invention, the temperature sensors 32 and 33 constitute an example of "the temperature information acquisition means" in the invention. Further, "the control means" in the second embodiment is realized by executing the processes of the routines shown in FIGS. 13 and 14 in the ECU 50. "The HC purification active oxygen amount calculation means" in the fourth embodiment is realized by executing the processes of steps 112 and 120 in the ECU 50. "The NOx purification active oxygen amount calculation means" in the fourth embodiment is realized by executing the processes of steps 132 and 136 in the ECU 50. "The HC purification means" in the fourth embodiment is realized by executing the processes in steps 118 and 122 by the ECU 50. "The NOx purification means" in the fourth embodiment is realized by executing the processes in steps 134 and 138 by the ECU 50. "The catalyst temperature determination means" in the fifth embodiment is realized by executing the processes in step 130 by the ECU 50. "The oxidation catalyst temperature determination means" in the aforementioned eighth invention is realized through the performance of the processing in the aforementioned step 114 by the ECU 50. "The CO purification active oxygen amount calculation means" in the aforementioned eighth invention is realized through the performance of the processing in the aforementioned step 116 by the ECU 50. "The CO purification means" in the aforementioned eighth invention is realized through the performance of the processing in the aforementioned step 118 by the ECU 50.

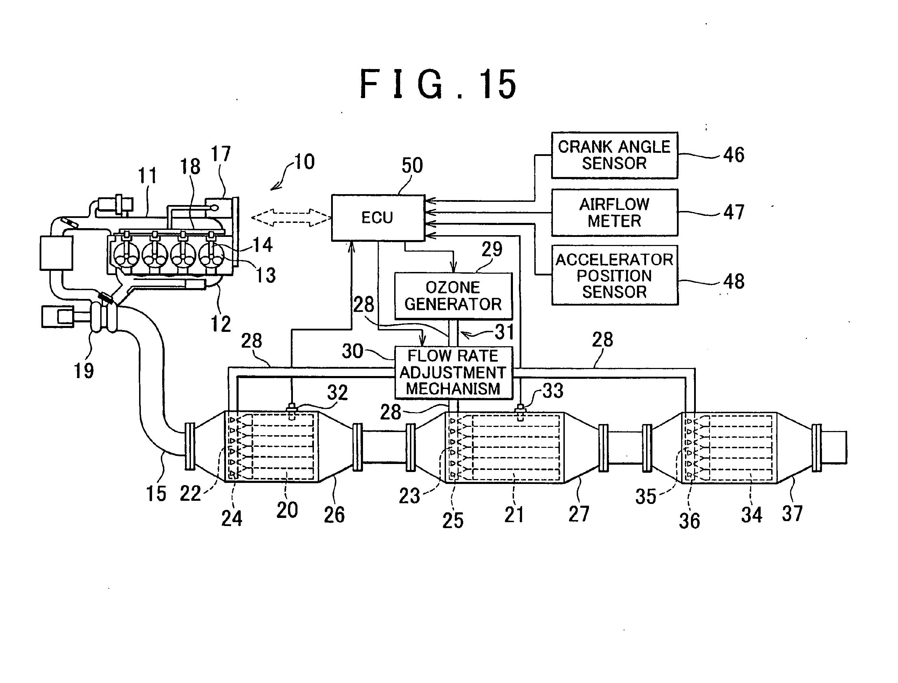

Next, the third embodiment of the invention will be described with reference to FIG. 15, but what is different from the above embodiments of the invention will be mainly described. The description will mainly focus attention on what is different from the above embodiments of the invention, and what is similar thereto will be described simply or not be described at all. FIG. 15 is a view for explaining a system configuration of an exhaust gas purification device according to the third embodiment of the invention. As shown in FIG. 15, in this embodiment of the invention, an Ag-containing oxidation catalyst 34 containing Ag as a catalyst component is further installed downstream of the NOx catalyst 21. A third ozone supply nozzle 35 is installed upstream of this Ag-containing oxidation catalyst 34, namely, between the NOx catalyst 21 and the Ag-containing oxidation catalyst 34. This third ozone supply nozzle 35 is provided with a plurality of third ozone supply ports 36. In the configuration shown in FIG. 15, the third ozone supply nozzle 35 is disposed inside a casing 37 common to the Ag-containing oxidation catalyst 34, and in front of (upstream of) the Ag-containing oxidation catalyst 34. The third ozone supply nozzle 35 is connected to the flow rate adjustment mechanism 30 via the ozone supply passage 28. Ozone generated by the ozone generator 29 is distributed to the first ozone supply nozzle 22, the second ozone supply nozzle 23, and the third ozone supply nozzle 35 by the flow rate adjustment mechanism 30. The flow rate adjustment mechanism 30 is designed to be capable of adjusting the flow rates of ozone flowing into the respective ozone supply nozzles 22, 23, and 35 individually.

There is a limit to the amount of NOx that can be occluded by the NOx catalyst 21. Thus, the ECU 50 performs NOx reduction control to supply a reducing agent to the NOx catalyst 21 before the amount of NOx occluded by the NOx catalyst 21 reaches its limit. When the reducing agent is supplied to the NOx catalyst 21, NOx is detached from the occluding material and react with the reducing agent through the action of the noble metal catalyst. The NOx can thereby be purified and removed. Fuel for the internal combustion engine 10 may be used as the reducing agent. The method of supplying the reducing agent to the NOx catalyst 21 is not limited in particular. For example, it is possible to mention a method of injecting fuel as the reducing agent from the fuel injector 14 in an expansion stroke or an exhaust stroke (i.e., post injection), a method of injecting the reducing agent from a reducing agent addition valve (not shown) provided in the exhaust passage 15, a method of making the air-fuel ratio in each cylinder much richer than usual through a large amount of EGR to carry out combustion at a low temperature at which no soot is generated) (i.e., low-temperature rich combustion), and the like. This NOx reduction control is known and hence will not be further described.

When the reducing agent is supplied to the NOx catalyst 21 and an NOx reduction reaction occurs in the NOx catalyst 21, CO is generated in the process of the reaction. In order to purify the CO, the CO needs to be oxidized downstream of the NOx catalyst 21. However, the temperature of exhaust gas downstream of the NOx catalyst 21 tends to be low because the region downstream of the NOx catalyst 21 is far from the exhaust manifold 12. Thus, even when a normal oxidation catalyst is disposed downstream of the NOx catalyst 21, the temperature of the oxidation catalyst does not sufficiently increase and thus, CO cannot be sufficiently purified in some cases.

Thus, in this embodiment of the invention, to reliably purifying CO generated through the NOx reduction reaction in the NOx catalyst 21, the Ag-containing oxidation catalyst 34 is provided, and the control of supplying ozone into the Ag-containing oxidation catalyst 34 is executed by adding ozone from the third ozone supply ports 36 when NOx reduction control is executed. As described above, CO can be sufficiently oxidized by the Ag catalyst at low temperatures, such as about 100 °C, in the case where ozone coexists. Thus, according to this embodiment of the invention, the CO generated as a result of the NOx reduction reaction in the NOx catalyst 21 is sufficiently purified in the Ag-containing oxidation catalyst 34 by executing the aforementioned control. Thus, the amount of CO that is discharged to the atmosphere when NOx is being reduced may is minimized.

In the third embodiment of the invention, the Ag-containing oxidation catalyst 34 is an example of "the Ag catalyst" in the invention, and the third ozone supply ports 36 constitute an example of "the third supply port" in the invention. Further, the ECU 50 controls the ozone supply device 31 such that ozone is supplied from the third ozone supply ports 36 when NOx reduction control is executed. "The means for supplying active oxygen from the third supply port" in the aforementioned tenth invention is thereby realized.

## Claims

1. An exhaust gas purification device comprising:
an oxidation catalyst (20) that is disposed in an exhaust passage of an internal combustion engine to oxidize unburned components in exhaust gas;
a NOx catalyst (21) that is installed downstream of the oxidation catalyst (20) in a direction of flow of exhaust gas in the internal combustion engine to purify NOx in the exhaust gas;
an active oxygen supply device (31) having a first supply port (24) for supplying active oxygen to a region upstream of the oxidation catalyst (20) in the direction of flow of the exhaust gas and a second supply port (25) for supplying active oxygen to a region between the oxidation catalyst (20) and the NOx catalyst (21);
a NOx purification active oxygen amount calculation means (50) for calculating an amount of active oxygen for purifying NOx;
a NOx purification means (50) for supplying active oxygen from the second supply port (25) in the amount calculated by the NOx purification active oxygen amount calculation means (50);
characterizied by further comprising:
a HC purification active oxygen amount calculation means (50) for calculating an amount of active oxygen for oxidizing HC based on a calculated HC discharge amount; and
a HC purification means (50) for supplying active oxygen from the first supply port (24) in the amount calculated by the HC purification active oxygen amount calculation means (50).

2. The exhaust gas purification device according to claim 1, further comprising:
temperature information acquisition means (32, 33) for acquiring information on temperatures of the oxidation catalyst (20) and the NOx catalyst (21); and
control means (50) for controlling supply of active oxygen from the first supply port (24) and supply of active oxygen from the second supply port (25) on a basis of the information.

3. The exhaust gas purification device according to claim 1 or 2, further comprising:
HC poisoning determination means (50) for determining whether or not the oxidation catalyst (20) suffers HC poisoning; and
HC poisoning recovery means (50) for supplying active oxygen from the first supply port (24) when it is determined that the oxidation catalyst (20) suffers HC poisoning.

4. The exhaust gas purification device according to any one of claims 1 to 3, further comprising:
catalyst temperature determination means (50) for determining whether the temperature of the NOx catalyst (21) is in a predetermined low temperature range or in a predetermined intermediate temperature range as a temperature range higher than the predetermined low temperature range; and
active oxygen amount control means (50) for controlling an amount of active oxygen supplied by the active oxygen supply device (31) such that a concentration of HC in exhaust gas that flows into the NOx catalyst (21) when it is determined that the temperature of the NOx catalyst (21) is in the intermediate temperature range becomes higher than a concentration of HC in exhaust gas that flows into the NOx catalyst (21) when it is determined that the temperature of the NOx catalyst (21) is in the low temperature range.

5. The exhaust gas purification device according to claim 4, wherein:
the low temperature range is a temperature range in which the NOx catalyst (21) is not activated; and
the intermediate temperature range ranges from a temperature at which the NOx catalyst (21) begins to be activated to a temperature at which the NOx catalyst (21) is sufficiently activated.

6. The exhaust gas purification device according to any one of claims 1 to 5, wherein the oxidation catalyst (20) contains Ag as a catalyst component.

7. The exhaust gas purification device according to claim 6, further comprising:
Ag catalyst temperature determination means (50) for determining whether the temperature of the oxidation catalyst (20) falls within a temperature range between a first temperature and a second temperature, which is higher than the first temperature;
CO purification active oxygen amount calculation means (50) for calculating an amount of active oxygen for purifying CO in the exhaust gas when it is determined that the temperature of the oxidation catalyst (20) is in the temperature range; and
CO purification means (50) for supplying the calculated amount of active oxygen through the first supply port.

8. The exhaust gas purification device according to claim 7, wherein:
the first temperature is a temperature at which Ag in the oxidation catalyst (20) exerts activity for oxidizing CO when active oxygen is present; and
the second temperature is a temperature at which the oxidation catalyst (20) oxidizes CO without recourse to active oxygen.

9. The exhaust gas purification device according to any one of claims 1 to 8, further comprising:
an Ag catalyst (34) that is disposed downstream of the NOx catalyst (21) and contains Ag as a catalyst component;
a third supply port (36) for supplying active oxygen to a region between the NOx catalyst (21) and the Ag catalyst (34);
reducing agent supply means for supplying a reducing agent to the NOx catalyst (21) for reducing occluded the NOx; and
means (50) for supplying active oxygen from the third supply port when the reducing agent is supplied to the NOx catalyst (21).

10. The exhaust gas purification device according to any one of claims 1 to 9, wherein the active oxygen is ozone.

11. The exhaust gas purification device according to claim 4 or 5, wherein the predetermined intermediate temperature range is 200 to 300°C.

12. The exhaust gas purification device according to claim 7 or 8, wherein:
the first temperature is 100 to 150°C; and
the second temperature is 200°C.

13. The exhaust gas purification device according to any one of claims 1 to 12, wherein the unburned components include HC.

14. The exhaust gas purification device according to any one of claims 1 to 13, wherein the NOx catalyst (21) purifies NOx through at least one of oxidative decomposition and occlusion of NOx.

## Patentansprüche

1. Abgasreinigungsvorrichtung, aufweisend:
einen Oxidationskatalysator (20), der sich in einem Abgasstrang einer Verbrennungskraftmaschine befindet, um nicht verbrannte Teile im Abgas zu oxidieren;
einen NOx-Katalysator (21), der sich stromabwärts von dem Oxidationskatalysator (20) in einer Strömungsrichtung des Abgases in der Verbrennungskraftmaschine befindet, um NOx in dem Abgas zu reinigen;
eine Aktivsauerstoffzuführvorrichtung (31) mit einer ersten Zuführöffnung (24) zum Zuführen von Aktivsauerstoff an einen Bereich, der sich stromaufwärts von dem Oxidationskatalysator (20) in der Strömungsrichtung des Abgases befindet, und einer zweiten Zuführöffnung (25) zum Zuführen von Aktivsauerstoff an einen Bereich zwischen dem Oxidationskatalysator (20) und dem NOx-Katalysator;
eine NOx-Reinigungs-Aktivsauerstoffmengenberechnungseinrichtung (50) zum Berechnen einer Aktivsauerstoffmenge zum Reinigen des NOx;
eine NOx-Reinigungseinrichtung (50) zum Zuführen von Aktivsauerstoff von der zweiten Zuführöffnung (25) in der durch die NOx-Reinigungs-Aktivsauerstoffmengenberechnungseinrichtung (50) berechneten Menge;
**dadurch gekennzeichnet, dass** sie ferner Folgendes aufweist:
eine HC-Reinigungs-Aktivsauerstoffmengenberechnungseinrichtung (50) zum Berechnen einer Menge an Aktivsauerstoff zum Oxidieren von HC auf der Grundlage einer berechneten HC-Ausstoßmenge; und
eine HC-Reinigungseinrichtung (50) zum Zuführen von Aktivsauerstoff von der ersten Zuführöffnung (24) aus in der von der HC-Reinigungs-Aktivsauerstoffmengenberechnungseinrichtung (50) berechneten Menge.

2. Abgasreinigungsvorrichtung nach Anspruch 1, ferner aufweisend:
eine Temperaturinformationserhaltungseinrichtung (32, 33) zum Erhalten von Informationen über Temperaturen des Oxidationskatalysators (20) und des NOx-Katalysators (21); und
eine Steuereinrichtung (50) zum Steuern der Zufuhr an Aktivsauerstoff von der ersten Zuführöffnung (24) und der Zufuhr von Aktivsauerstoff von der zweiten Zuführöffnung (25) auf Grundlage der Information.

3. Abgasreinigungsvorrichtung nach Anspruch 1 oder 2, ferner aufweisend:
eine HC-Vergiftungsbestimmungseinrichtung (50) zum Bestimmen, ob bei dem Oxidationskatalysator (20) eine HC-Vergiftung vorliegt; und
eine HC-Vergiftungserholungseinrichtung (50) zum Zuführen von Aktivsauerstoff von der ersten Zuführöffnung (24) aus, wenn bestimmt wird, dass bei dem Oxidationskatalysator (20) eine HC-Vergiftung vorliegt.

4. Abgasreinigungsvorrichtung nach einem der Ansprüche 1 bis 3, ferner aufweisend:
eine Katalysatortemperaturbestimmungseinrichtung (50) zum Bestimmen, ob sich die Temperatur des NOx-Katalysators (21) in einem vorgegebenen Niedrigtemperaturbereich oder in einem vorgegebenen Zwischentemperaturbereich, der einen Temperaturbereich darstellt, der höher ist als der vorgegebene Niedrigtemperaturbereich, befindet; und
eine Aktivsauerstoffmengensteuereinrichtung (50) zum Steuern einer Aktivsauerstoffmenge, die durch die Aktivsauerstoffzuführvorrichtung (31) zugeführt wird, so dass eine HC-Konzentration in dem Abgas, das in den NOx-Katalysator (21) strömt, wenn bestimmt wird, dass sich die Temperatur des NOx-Katalysators (21) in dem Zwischentemperaturbereich befindet, höher wird als eine HC-Konzentration in dem Abgas, das in den NOx-Katalysator (21) strömt, wenn bestimmt wird, dass sich die Temperatur des NOx-Katalysators (21) in dem Niedrigtemperaturbereich befindet.

5. Abgasreinigungsvorrichtung nach Anspruch 4, wobei:
der Niedrigtemperaturbereich ein Temperaturbereich ist, in dem der NOx-Katalysator (21) nicht aktiviert ist; und
der Zwischentemperaturbereich von einer Temperatur, bei der der NOx-Katalysator (21) anfängt, aktiviert zu werden, bis zu einer Temperatur, bei der der NOx-Katalysator (21) in ausreichendem Maße aktiviert ist, reicht.

6. Abgasreinigungsvorrichtung nach einem der Ansprüche 1 bis 5, wobei der Oxidationskatalysator (20) Ag als einen Katalysatorbestandteil enthält.

7. Abgasreinigungsvorrichtung nach Anspruch 6, ferner aufweisend:
eine Ag-Katalysatortemperaturbestimmungseinrichtung (50) zum Bestimmen, ob sich die Temperatur des Oxidationskatalysators (20) in einem Temperaturbereich zwischen einer ersten Temperatur und einer zweiten Temperatur, die höher ist als die erste Temperatur, befindet;
eine CO-Reinigungs-Aktivsauerstoffmengenberechnungseinrichtung (50) zum Berechnen einer Aktivsauerstoffmenge zum Reinigen von CO in dem Abgas, wenn bestimmt wird, dass sich die Temperatur des Oxidationskatalysators (20) in dem Temperaturbereich befindet; und
eine CO-Reinigungseinrichtung (50) zum Zuführen der berechneten Menge an Aktivsauerstoff durch die erste Zuführöffnung.

8. Abgasreinigungsvorrichtung nach Anspruch 7, wobei:
die erste Temperatur eine Temperatur ist, bei der das Ag in dem Oxidationskatalysator (20) eine Aktivität ausübt, um CO zu oxidieren, wenn Aktivsauerstoff vorhanden ist; und
die zweite Temperatur eine Temperatur ist, bei der der Oxidationskatalysator (20) das CO ohne Rekurs auf Aktivsauerstoff oxidiert.

9. Abgasreinigungsvorrichtung nach einem der Ansprüche 1 bis 8, ferner aufweisend:
einen Ag-Katalysator (34), der sich stromabwärts von dem NOx-Katalysator (21) befindet und Ag als Katalysatorbestandteil enthält;
eine dritte Zuführöffnung (36) zum Zuführen von Aktivsauerstoff an einen Bereich zwischen dem NOx-Katalysator (21) und dem Ag-Katalysator (34);
eine Reduktionsmittelzuführeinrichtung zum Zuführen eines Reduktionsmittels an den NOx-Katalysator (21), um ein Verstopfen durch das NOx zu reduzieren; und
eine Einrichtung (50) zum Zuführen von Aktivsauerstoff von der dritten Zuführöffnung, wenn das Reduktionsmittel dem NOx-Katalysator (21) zugeführt wird.

10. Abgasreinigungsvorrichtung nach einem der Ansprüche 1 bis 9, wobei der Aktivsauerstoff Ozon ist.

11. Abgasreinigungsvorrichtung nach Anspruch 4 oder 5, wobei der vorgegebene Zwischentemperaturbereich von 200 bis 300 °C reicht.

12. Abgasreinigungsvorrichtung nach Anspruch 7 oder 8, wobei:
die erste Temperatur 100 bis 150 °C beträgt; und
die zweite Temperatur 200 °C beträgt.

13. Abgasreinigungsvorrichtung nach einem der Ansprüche 1 bis 12, wobei die nicht verbrannten Teile HC enthalten.

14. Abgasreinigungsvorrichtung nach einem der Ansprüche 1 bis 13, wobei der NOx-Katalysator (21) NOx durch zumindest eines von oxidativer Zerlegung und Okklusion von NOx reinigt.

## Revendications

1. Dispositif de purification de gaz d'échappement comprenant :
un catalyseur d'oxydation (20) qui est disposé dans un passage de gaz d'échappement d'un moteur à combustion interne pour oxyder des constituants non brûlés dans les gaz d'échappement ;
un catalyseur de NOx (21) qui est installé en aval du catalyseur d'oxydation (20) dans une direction d'écoulement des gaz d'échappement dans le moteur à combustion interne pour purifier NOx dans les gaz d'échappement ;
un dispositif d'alimentation en oxygène actif (31) présentant un premier orifice d'alimentation (24) pour introduire de l'oxygène actif dans une région en amont du catalyseur d'oxydation (20) dans la direction d'écoulement des gaz d'échappement et un second orifice d'alimentation (25) pour introduire de l'oxygène actif dans une région entre le catalyseur d'oxydation (20) et le catalyseur de NOx (21) ;
un moyen de calcul de quantité d'oxygène actif de purification de NOx (50) pour calculer une quantité d'oxygène actif pour purifier NOx ;
un moyen de purification de NOx (50) pour introduire de l'oxygène actif du second orifice d'alimentation (25) dans la quantité calculée par le moyen de calcul de quantité d'oxygène actif de purification de NOx (50) ;
**caractérisé en ce qu'**il comprend de plus :
un moyen de calcul de quantité d'oxygène actif de purification de HC (50) pour calculer une quantité d'oxygène actif pour oxyder HC sur la base d'une quantité d'évacuation de HC calculée ; et
un moyen de purification de HC (50) pour introduire de l'oxygène actif du premier orifice d'alimentation (24) dans la quantité calculée par le moyen de calcul de quantité d'oxygène actif (50) de purification de HC.

2. Dispositif de purification de gaz d'échappement selon la revendication 1, comprenant de plus :
un moyen d'acquisition d'information de température (32, 33) pour acquérir une information sur les températures du catalyseur d'oxydation (20) et du catalyseur de NOx (21) ; et
un moyen de contrôle (50) pour contrôler l'introduction d'oxygène actif du premier orifice d'alimentation (24) et introduire de l'oxygène actif du second orifice d'alimentation (25) sur une base de l'information.

3. Dispositif de purification de gaz d'échappement selon la revendication 1 ou 2, comprenant de plus :
un moyen de détermination d'empoisonnement au HC (50) pour déterminer si le catalyseur d'oxydation (20) soufre ou non d'un empoisonnement au HC ; et
un moyen de récupération d'empoisonnement au HC (50) pour introduire de l'oxygène actif du premier orifice d'alimentation (24) lorsqu'il est déterminé que le catalyseur d'oxydation (20) souffre d'un empoisonnement au HC.

4. Dispositif de purification de gaz d'échappement selon l'une quelconque des revendications 1 à 3, comprenant de plus :
un moyen de détermination de température de catalyseur (50) pour déterminer si la température du catalyseur de NOx (21) est dans un intervalle de faible température prédéterminé ou dans un intervalle de température intermédiaire prédéterminé comme un intervalle de température supérieur à l'intervalle de faible température prédéterminé ; et
un moyen de contrôle de quantité oxygène (50) pour contrôler une quantité d'oxygène actif introduit par le dispositif d'alimentation en oxygène actif (31) de sorte qu'une concentration en HC dans les gaz d'échappement qui s'écoulent dans le catalyseur de NOx (21), lorsqu'il est déterminé que la température du catalyseur de NOx (21) se trouve dans l'intervalle de température intermédiaire, devient supérieure à une concentration en HC dans les gaz d'échappement qui s'écoutent dans le catalyseur de NOx (21), lorsqu'il est déterminé que la température du catalyseur de NOx (21) se trouve dans l'intervalle de faible température.

5. Dispositif de purification de gaz d'échappement selon la revendication 4, dans lequel :
l'intervalle de faible température est un intervalle de température dans lequel le catalyseur de NOx (21) n'est pas activé ; et
l'intervalle de température intermédiaire est compris entre une température à laquelle le catalyseur de NOx (21) commence à être activé et une température à laquelle le catalyseur de NOx (21) est suffisamment activé.

6. Dispositif de purification de gaz d'échappement selon l'une quelconque des revendications 1 à 5, dans lequel le catalyseur d'oxydation (20) contient Ag comme un constituant de catalyseur.

7. Dispositif de purification de gaz d'échappement selon la revendication 6, comprenant de plus :
un moyen de détermination de température de catalyseur d'Ag (50) pour déterminer si la température du catalyseur d'oxydation (20) se trouve dans un intervalle de température entre une première température et une seconde température, qui est supérieure à la première température ;
un moyen de calcul de quantité d'oxygène actif de purification de CO (50) pour calculer une quantité d'oxygène actif pour purifier CO dans les gaz d'échappement, lorsqu'il est déterminé que la température du catalyseur d'oxydation (20) se trouve dans l'intervalle de température ; et
un moyen de purification de CO (50) pour introduire la quantité calculée d'oxygène actif par le premier orifice d'alimentation.

8. Dispositif de purification de gaz d'échappement selon la revendication 7, dans lequel :
la première température est une température à laquelle Ag dans le catalyseur d'oxydation (20) exerce une activité pour oxyder CO lorsque de l'oxygène actif est présent ; et
la seconde température est une température à laquelle le catalyseur d'oxydation (20) oxyde CO sans recours à de l'oxygène actif.

9. Dispositif de purification de gaz d'échappement selon l'une quelconque des revendications 1 à 8, comprenant de plus :
un catalyseur d'Ag (34) qui est disposé en aval du catalyseur de NOx (21) et qui contient Ag comme un constituant de catalyseur ;
un troisième orifice d'alimentation (36) pour introduire de l'oxygène actif dans une région entre le catalyseur de NOx (21) et le catalyseur d'Ag (34) ;
un moyen d'alimentation en agent réducteur pour introduire un agent réducteur dans le catalyseur de NOx (21) pour une réduction occlusion du NOx ; et
un moyen (50) pour introduire de l'oxygène actif du troisième orifice d'alimentation lorsque l'agent réducteur est introduit dans le catalyseur de NOx (21).

10. Dispositif de purification de gaz d'échappement selon l'une quelconque des revendications 1 à 9, dans lequel l'oxygène actif est l'ozone.

11. Dispositif de purification de gaz d'échappement selon la revendication 4 ou 5, dans lequel l'intervalle de température intermédiaire prédéterminé est de 200 à 300°C.

12. Dispositif de purification de gaz d'échappement selon la revendication 7 ou 8, dans lequel :
la première température est de 100 à 150°C ; et
la seconde température est de 200°C.

13. Dispositif de purification de gaz d'échappement selon l'une quelconque des revendications 1 à 12, dans lequel les constituants non brûlés comprennent HC.

14. Dispositif de purification de gaz d'échappement selon l'une quelconque des revendications 1 à 13, dans lequel le catalyseur de NOx (21) purifie NOx par l'intermédiaire d'au moins une d'une décomposition oxydante et d'une occlusion de NOx.
